# EUROPÄISCHE PATENTSCHRIFT

(11) **EP 0 525 688 B1**
(45) Veröffentlichungstag und Bekanntmachung des Hinweises auf die Patenterteilung: **20.03.1996**
(21) Anmeldenummer: 92112738.7
(22) Anmeldetag: 24.07.1992
(51) Int. Cl.: F16K 47/02

(54) **Regelventil zum Regeln und Absperren eines Volumenstroms eines Strömungsmediums**
Control valve for controlling and shut off fluid flow
Soupape de réglage pour réglage et arrêt du débit d'un fluide

(30) Priorität: 26.07.1991 DE 9109272 U
(43) Veröffentlichungstag der Anmeldung: 03.02.1993
(73) Patentinhaber: PAUL PLEIGER Maschinenfabrik GmbH & Co. KG, D-58423 Witten (DE)
(72) Erfinder: Benra, Friedrich Karl, Dr.-Ing., W-5810 Witten 7 (DE)
(74) Vertreter: Klingseisen, Franz, Dipl.-Ing.

(56) Entgegenhaltungen:
- CH-A- 581 792
- DE-U- 8 536 664
- US-A- 1 217 726
- US-A- 2 847 183
- US-A- 3 631 891
- US-A- 3 648 718
- US-A- 3 964 516
- US-A- 4 041 982
- US-A- 4 456 033

## Beschreibung

Die Erfindung betrifft ein Regelventil nach dem Oberbegriff des Anspruchs 1.

Ein Ventil dieser Art ist aus US-A-1,217 726 bekannt, wobei die dem Regelquerschnitt nachgeschaltete Dichtung so im Ventilteller angeordnet ist, daß der außenliegende Rand der im Querschnitt rechteckigen Dichtung in den schräg zur Längsachse des Ventils verlaufenden Strömungskanal ragt, so daß das Strömungsmedium diesen vorstehenden Rand der Dichtung umspült. Hierdurch wird dieser für die Anlage am Ventilsitz vorgesehene Bereich der Dichtung durch das Strömungsmedium erodiert, so daß die Lebensdauer der Dichtung beeinträchtigt wird.

Insbesondere beim Regeln von Dampf oder Sattdampf, beispielsweise in einem Wärmetauscher-Kreislauf, treten zwischen dem Ventileingang und dem Ventilausgang große Druckdifferenzen auf. Besonders bei kleinen Volumenströmen, d.h. beim Regeln von kleinen Dampfmengen durch Einstellen eines kleinen Ringspaltes, treten im Bereich der Weichdichtung große Strömungsgeschwindigkeiten auf, die aufgrund der hohen Temperaturen und Drücke innerhalb kürzester Betriebszeiten zur Erosion führen. Die einmal beschädigte Weichdichtung ist nicht mehr in der Lage, das Ventil absolut dicht zu verschließen und die Regelaufgaben zu erfüllen. Der begonnene Erosionsvorgang setzt sich, verstärkt durch die Leckagen, weiter fort und führt zu weiterer Beschädigung und schließlich zur Zerstörung der Weichdichtung.

Der Erfindung liegt die Aufgabe zugrunde, ein Regelventil der eingangs angegebenen Art so auszubilden, daß die Weichdichtung durch das strömende Medium möglichst wenig erodiert wird und die Weichdichtung über eine längere Betriebsdauer funktionsfähig bleibt.

Diese Aufgabe wird erfindungsgemäß durch die Merkmale des Anspruchs 1 gelöst. Dadurch, daß dem Öffnungsquerschnitt an der Weichdichtung ein kleinerer Regelquerschnitt vorgeschaltet wird und damit die Regelfunktion des Ventils von der Absperrfunktion an der Weichdichtung getrennt wird, kann die Regelfunktion durch verschleißfeste Bauteile ausgeführt werden, während an der nachgeschalteten Weichdichtung eine geringere Strömungsgeschwindigkeit aufgrund des größeren Öffnungsquerschnitts auftritt, so daß die Weichdichtung weniger verschleißt und deren Standzeit wesentlich verlängert wird.

Eine beispielsweise Ausführungsform der Erfindung wird nachfolgend anhand der Zeichnung näher erläutert, die einen Längsschnitt durch ein Regelventil zeigt.

Das Ventilgehäuse 1 ist mit einem Eingang 2 und einem Ausgang 3 für das Strömungsmedium versehen, wobei die Strömungsrichtung mit Pfeilen dargestellt ist. Mit dem Ventilgehäuse 1 ist ein Ventilsitz 4 fest verbunden. Der Ventilsitz 4 ist einerseits einstückig mit einer Sitzhülse 7 und andererseits mit einem Ringvorsprung 8 versehen, gegen welchen im vollständig geschlossenen Zustand des Regelventils eine Weichdichtung 9 aus Teflon anliegt. Der Ventilsitz 4 kann auch mehrteilig ausgebildet sein, beispielweise indem die Sitzhülse 7 in den Ventilsitz eingeschraubt ist. Die Weichdichtung 9 wird von einer Ventiltellerhülse 10 getragen. Die Ventiltellerhülse 10 kann von einer Spindel 11 bewegt werden, so daß die Weichdichtung 9 zum Öffnen des Ventils von dem Ringvorsprung 8 abgehoben werden kann. Die Spindel 11 ist über eine Stopfbuchsenhülse 12 mit Hilfe der Stopfbuchse 13 nach außen geführt und abgedichtet.

Bei 14 ist eine Flachdichtung 14 angedeutet, die über einen Druckring 15 und einen Deckel 17 anliegend gehalten wird. Bei 16 sind Schrauben dargestellt.

Die Spindel 11 liegt mit einer Ringschulter 18 an der oberen Stirnwand der Ventiltellerhülse 10 an. Die Spindel 11 ist weiter mit einem Kolbenteil 19 mit Hilfe eines Gewindeansatzes 20 verschraubt. Darüberhinaus ist der Kolbenteil 19 mit Hilfe von Schrauben 21 mit der Ventiltellerhülse 10 verschraubt. Damit sind die Spindel 11, die Ventiltellerhülse 10 und der Kolbenteil 19 fest miteinander verbunden, wodurch die Ventiltellerhülse 10 und der Kolbenteil 19 gemeinsam und gleichlaufend von der Spindel 11 angetrieben werden. Diese Ausgestaltung dient als Sicherung gegen Lösen, es ist aber auch eine andere Ausgestaltung möglich.

Der Kolbenteil 19 trägt einen Kolbenring 22, welcher bei Bewegung der Einheit aus Spindel, Ventiltellerhülse 10 und Kolbenteil in senkrechter Richtung entlang der Innenwand 23 der Sitzhülse 7 gleitet. Der Kolbenring ist gegen die Innenwand 23 der Sitzhülse 7 vorgespannt und befindet sich abgesehen von Leckagen aufgrund des notwendigen Stoßspiels in abdichtendem Gleitkontakt mit der Innenwand 23 der Sitzhülse 7. Die zylindrische Sitzhülse 7 ist mit Perforierungen 24 versehen. Am unteren Ende 25 der Sitzhülse 7 ist diese frei von Perforierungen.

Am unteren Ende des Kolbenteils 19 ist eine Ventilkegelhülse 26 vorgesehen, die nach unten offen ist und in ihrem oberen Bereich mit Perforierungen 27 versehen ist. Darüberhinaus ist der Kolbenteil 19 oberhalb des Kolbenrings 22 mit einer ringförmigen Wirbelkammer 28 versehen.

Wenn die Einheit aus Spindel 11, Ventilhülse 10 und Kolbenteil 19 in senkrechter Richtung um einen kleinen Betrag nach oben bewegt wird, wird dadurch die Ventiltellerhülse 10 mit ihrer Weichdichtung 9 von dem ringförmigen Vorsprung 8 des Ventilsitzes 4 abgehoben, wodurch zwischen dem ringförmigen Vorsprung 8 und der Weichdichtung 9 ein ringförmiger Öffnungsquerschnitt entsteht, bevor der Regelquerschnitt zwischen Sitzhülse 7 und Ventilkegelhülse 26 freigegeben wird. Eine geringe Menge des Mediums strömt durch die nach unten offene Stirnfläche der Ventilkegelhülse 26 über deren Perforierung 27 zu dem Kolbenring 22, der die Strömung durch ein notwendiges Stoßspiel des Kolbenrings in die Wirbelkammer 28 hinein expandieren läßt. In der zuvor beschriebenen Öffnungsstellung befindet sich der Kolbenring noch im unteren, perforarionsfreien Bereich der Sitzhülse 7, so daß der einzige Weg für die Strömung zu dem Öffnungsquerschnitt zwischen dem ringförmigen Vorsprung 8 und der Weichdichtung 9 und damit zum Ausgang 3 des Regelventils vorbei an dem Kolbenring 22 über die Wirbelkammer 28 und schließlich durch die Perforierung 24 der Sitzhülse 7 und weiter durch einen Ringspalt 29 zwischen der zylindrischen Außenfläche der Sitzhülse 7 und der zylindrischen Innenfläche der Ventil-tellerhülse 10 führt. Durch Expansion des Mediums (Dampf) in den im Gegensatz zu den Spalten am Kolbenring 22 sehr großen Raum der Wirbelkammer 28 wird die Energie des Mediums durch Verwirbelung abgebaut und somit der Druck in einer ersten Stufe herabgesetzt.

An der Weichdichtung 9 liegt demzufolge nur ein sehr geringes Druckgefälle mit folglich kleinen Strömungsgeschwindigkeiten an. Zudem ist an der Weichdichtung der Öffnungsquerschnitt direkt proportional dem Ventilhub und aufgrund des relativ großen Durchmessers der Weichdichtung 9 erreicht man auch bei geringen Ventilhüben (einige Bruchteile von Millimetern) bereits freie Strömungsquerschnitte, die wesentlich größer als die Spalte am Kolbenring 22 sind.

Wenn ausgehend von der oben beschriebenen Öffnungsstellung die Ventiltellerhülse 10 und der Kolbenteil 19 mittels der Spindel 11 weiter in senkrechter Richtung nach oben bewegt werden, überstreicht der Kolbenring 22 die Perforierung 24 der Sitzhülse 7. Gleichzeitig wird die Ventilkegelhülse 26 so weit nach oben bewegt, daß ihre Perforierung 27 der Sitzhülse 7 gegenüberliegt. Das Medium strömt jetzt im wesentlichen direkt über die Perforierung 27 der Ventilkegelhülse 26 durch die Perforierung 24 der Sitzhülse 7 zu dem Ausgang 3, wobei die Drosselung durch die Perforierung 27 der Ventilkegelhülse 26 und die Perforierung 24 der Sitzhülse 7 erfolgt. Der freiwerdende Öffnungsquerschnitt an der Weichdichtung 9 ist immer größer als die durch den Kolbenring 22 bzw. die einander gegenüberliegenden Perforierungen freigegebene Fläche, so daß die Expansion und damit der Druckabbau nicht an der Weichdichtung, sondern an der verschleißfesten Sitzhülse 7 stattfindet.

Durch die besondere Gestaltung der Perforierung 24 in der Sitzhülse 7 lassen sich verschiedene kᵥₛ-Werte und verschiedene Kennlinien in einer Ventilnennweite realisieren. Der kᵥₛ-Wert gibt diejenige Menge Wasser in m /h bei 5 bis 30°C an, die bei einem Druckverlust von p = 1 bar und dem Nennhub H₁₀₀ durch das Ventil fließt.

Der Ventilkegel bzw. die Ventilkegelhülse 26 kann verschiedenartig gestaltet sein. Bei hohem Druckgefälle ist es sinnvoll, den Ventilkegel, wie dargestellt, als Hülse auszubilden und mit radialen Durchbrüchen zu versehen. Dadurch wird der Druckabbau auf zwei Stufen verteilt, so daß am Kolbenring ein geringerer Verschleiß auftritt und auch eine Geräuschdämpfung erzielt wird.

Bei Ventilen größeren Nennweite kann es aufgrund des großen Durchmessers der Weichdichtung erforderlich werden, den Ventilkegel hydraulisch zu entlasten.

Nach einer abgewandelten Ausführungsform können auch mehrere Kolbenringe vorgesehen sein. Anstelle eines Kolbenrings kann auch ein anderes elastisches Bauteil aus verschleißfestem Material vorgesehen werden, das eine Abdichtwirkung hat.

Zweckmäßigerweise ist zwischen der Innenwand der Ventiltellerhülse 10 und der Außenwand der Sitzhülse 7 ein merklicher Ringspalt vorhanden.

Durch einen eigenen Antrieb für die Weichdichtung und einen gesonderten Antrieb für den Ventilkegel können die Aufgaben Regeln und Abdichten vollständig voneinander getrennt werden. So kann die Ventiltellerhülse 10 zunächst in ihre völlig geöffnete Stellung gebracht werden, worauf erst danach der Regelquerschnitt freigegeben wird.

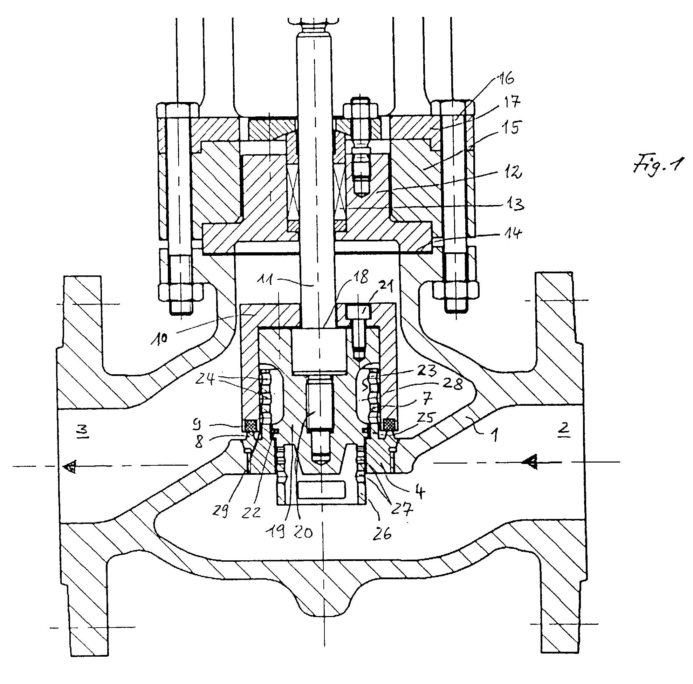

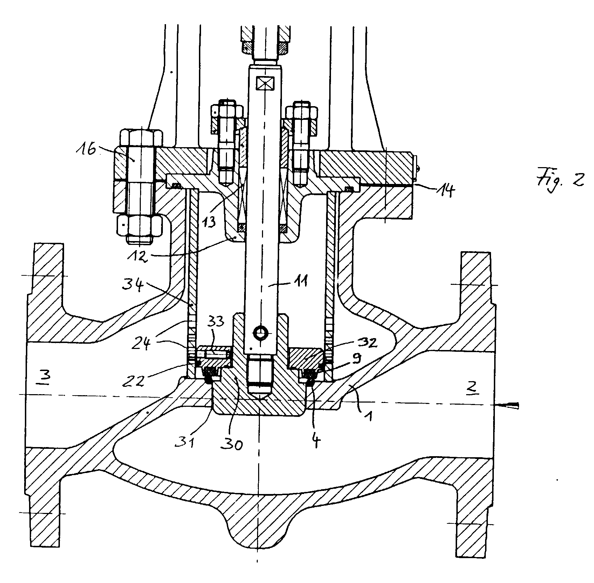

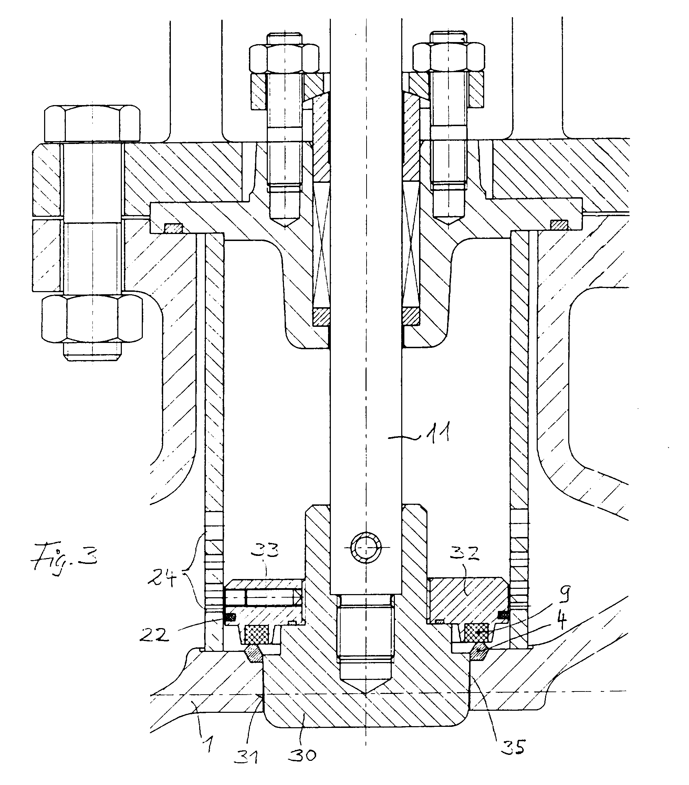

Fig. 2 und 3 zeigen eine abgewandelte Ausführungsform des erfindungsgemäßen Regelventils, wobei gleiche bzw. entsprechende Bauteile mit den gleichen Bezugszeichen wie in Fig. 1 versehen sind.

Am unteren Ende der Spindel 11 ist ein Ventilkörper 30 befestigt, der in die zylindrische Durchgangsbohrung 31 in der Zwischenwand des Gehäuses 1 in der dargestellten Schließstellung des Ventils eintaucht. Auf einer Ringschulter des Ventilkörpers 30 liegt ein Ring 32 auf, der durch eine Madenschraube 33 am Ventilkörper befestigt ist. Dieser Ring 32 trägt in einer Ringnut die Weichdichtung 9, die an dem unmittelbar im Gehäuse 1 befestigten Ventilsitz 4 anliegt. Auf dem Außenumfang des Ringes 32 ist wenigstens ein Kolbenring 22 angebracht, der auf dem Innenumfang eines Ventilkegelführungsrohres 34 gleitet, das bei diesem Ausführungsbeispiel zwischen der Stopfbuchsenhülse 12 und der Zwischenwand des Gehäuses 1 eingespannt ist. Dieses Rohr 34 ist im unteren Bereich mit der Perforierung 24 in Form von über den Umfang verteilten Durchtrittsöffnungen versehen.

Wie Fig. 3 im einzelnen zeigt, sind die einzelnen Durchtrittsöffnungen der Perforierung 24 so ausgebildet, daß sie von unten nach oben einen größer werdenden Durchmesser aufweisen. In der Schließstellung des Ventils liegt der Kolbenring 22 unterhalb der ersten Durchtrittsöffnung, die den kleinsten Durchmesser aufweist. Unterhalb des Kolbenringes 22 ist das Ventilkegelführungsrohr 34 frei von Durchtrittsöffnungen und bei Öffnung des Ventils durchfährt die Spindel 11 zuerst einen gewissen Hub, bevor die ersten Durchtrittsöffnungen 24 freigegeben werden.

Wie aus Fig. 3 erkennbar, hat der Ventilkörper 30 die Form eines Parabolkegels an den Seitenwänden anstelle der Ventilkegelhülse 26 in Fig. 1. Dieser Parabolkegel bildet mit der zylindrischen Gehäusebohrung 31 eine erste Drosselstelle bei 35 entsprechend dem Regelquerschnitt, der bei der Ausführungsform nach Fig. 1 durch die Perforierung 27 an der Ventilkegelhülse 26 ausgebildet ist.

Wenn das Ventil nach den Fig. 2 und 3 aus der dargestellten Schließstellung durch Anheben der Spindel 11 geöffnet wird, wird zunächst die Weichdichtung 9 vom Ventilsitz 4 abgehoben. Dabei wird wegen des notwendigen Radialspiels zwischen dem Ventilkörper 30 und der zylindrischen Gehäusebohrung 31 an der ersten Drosselstelle 35 ein Querschnitt freigegeben, der größer als der Öffnungsquerschnitt zwischen Weichdichtung und Ventilsitz ist. In diesem Öffnungszustand gibt der Kolbenring 22 aber noch keine Druchtrittsöffnung der Perforierung 24 frei, so daß lediglich die Leckagen über das Spiel des Kolbenringes durch das Ventil fließen können. Erst wenn der Kolbenring so weit angehoben wird, daß das Strömungsmedium durch die ersten Durchtrittsöffnungen an der Perforierung 24 austreten kann, beginnt ein merklicher Volumenstrom zu fließen. Dann ist aber bereits der Durchflußquerschnitt zwischen Weichdichtung und Ventilsitz wesentlich größer als die Durchtrittsquerschnitte an der Drosselstelle 35 und der durch die Druchtrittsöffnungen der Perforierung 24 zusammen mit dem Ring 32 bzw. dem daran befestigten verschleißfesten Drosselelement, das bei dem dargestellten Ausführungsbeispiel als Kolbenring 22 ausgebildet ist, gebildeten zweiten Drosselstelle.

Es ergibt sich ein mehrstufiger Druckabbau, wobei an der Weichdichtung 9 nur geringe Strömungsgeschwindigkeiten zwischen den beiden Drosselquerschnitten auftreten.

Die Ausbildung der Drosselquerschnitte bei 35 und 24 kann in Abhängigkeit vom Ventilhub je nach Anforderung variiert werden. Es ist möglich, die gesamte Druckdifferenz vom Ventileingang zum Ventilausgang in beliebiger Weise auf die beiden Drosselquerschnitte aufzuteilen. Ebenso können beliebige Ventilkennlinien und auch verschiedene kᵥₛ-Werte realisiert werden.

Anstelle der Parabolkegelform des Ventilkörpers 30 kann auch eine perforierte Ventilkegelhülse vorgesehen werden, wie sie in Fig. 1 bei 26 dargestellt ist.

Durch die stirnseitige Abdichtung an den beiden Enden des Ventilkegelführungsrohres 34 läßt sich der Raum über dem Ventilkegel 30 für einen hydraulischen Druckausgleich nutzen, wenn der Haltering 32 für den Kolbenring 22 und die Weichdichtung 9 bis über die Durchtrittsöffnungen 24 des Ventilkegelführungsrohres 34 hinaus verlängert und an dieser Stelle durch ein entsprechendes Element abgedichtet wird. Durch Verbindung des so gebildeten, vollständig abgedichteten Raumes über dem Ventilkegel in dem Ventilkegelführungsrohr 34 mit dem Ventileintritt bei 2 erhält man einen hydraulischen Druckausgleich.

Die bei der Bauweise nach Fig. 1 mit 28 bezeichnete Wirbelkammer, in die die Leckagen über den Kolbenring 22 entspannt werden, ergibt sich bei der Bauweise nach den Fig. 2 und 3 in verkleinerter Form hinter der ersten Drosselstelle bei 35.

Der Ventilsitz 4 kann bei der Bauweise nach den Fig. 2 und 3 eingeschraubt, eingewalzt, aufgepanzert, angedreht, eingeschrumpft oder auch als Sitzring eingeschweißt sein.

Auch bei der Bauweise nach den Fig. 2 und 3 kann ein getrennter Antrieb für die Weichdichtung 9 und den Ventilkegel 30 vorgesehen werden. In diesem Falle wird der Ring 32 unabhängig vom Ventilkegel 30 angehoben.

Die Bauweise nach den Fig. 2 und 3 ist gegenüber der nach Fig. 1 einfacher und kompakter. Das Ventil kann für alle Medien (Dämpfe, Gase, Flüssigkeiten) eingesetzt werden. Bei Öffnung des Ventils wird an der Weichdichtung 9 immer ein größerer Querschnitt freigegeben als an den beiden Drosselstellen bei 35 und 24 vor und nach der Weichdichtung, so daß im Bereich der Weichdichtung die Strömungsgeschwindigkeiten klein bleiben und die Weichdichtung vor Abrasion und Erosion geschützt wird.

Es können zusätzliche geräuschmindernde Einsätze mit einem entsprechenden Befestigungsmechanismus vor der ersten Drosselstelle bei 35 und hinter der zweiten Drosselstelle bei 24 in Form von z. B. Lochsieben, Drahtgeflechten oder dgl. eingesetzt werden. Derartige Einsätze vor der Drosselstelle bei 35 erhöhen die Anzahl der Druckstufen und senken somit die Druckdifferenz pro Druckstufe. Einsätze nach der zweiten Drosselstelle bei 24 verkürzen die Freistrahllänge und beschleunigen den Impulsaustausch und verringern somit die Geräuschemissionen.

## Patentansprüche

1. Regelventil zum Regeln und Absperren eines Volumenstroms eines Strömungsmediums, mit einer Weichdichtung (9) an einem Ventilteller (10,32), der mit einem Antrieb verbunden ist und die Weichdichtung an einen Ventilsitz (4) andrückt und von diesem abhebt, wobei in Strömungsrichtung des Mediums dem zwischen Weichdichtung (9) und Ventilsitz (4) vorhandenen Öffnungsquerschnitt ein Regelquerschnitt vorgeschaltet ist, der kleiner ausgelegt ist als der zugeordnete Öffnungsquerschnitt an der Weichdichtung (9),
**dadurch gekennzeichnet**,
daß die Weichdichtung (9) in der senkrecht zur Längsachse des Ventiltellers liegenden Stirnseite des Ventiltellers (10,32) versenkt so angeordnet ist, daß das Strömungsmedium im wesentlichen parallel zur der freiliegenden Seite der Weichdichtung (9) an dieser entlangströmt, wenn die Weichdichtung (9) vom Ventilsitz (4) abgehoben ist.

2. Regelventil nach Anspruch 1,
**dadurch gekennzeichnet**,
daß der Ventilteller die Form einer einseitig vollständig offenen zylindrischen Ventiltellerhülse (10) hat, welche an ihrer vollständig offenen Seite mit ihrer Stirnfläche die Weichdichtung (9) trägt, wobei die Ventiltellerhülse (10) zum Erreichen der Öffnungsstellung mit ihrer Weichdichtung (9) von dem Ventilsitz (4) abhebbar ist, und daß als Regelelement eine in den zylindrischen Ventiltellerhülsen-Innenraum hineinragende zylinderförmige Sitzhülse (7), deren zylindrische Seitenwand perforiert ist, und ein gegen die zylindrische, perforierte Innenwand der Sitzhülse (7) gleitend abgedichteter, zylindrischer Kolbenteil (19) vorgesehen ist, welcher relativ zu der Sitzhülse (7) in deren Axialrichtung den Volumenstrom regelnd verschiebbar ist.

3. Regelventil nach Anspruch 2,
dadurch gekennzeichnet,
daß zwischen der Innenwand der zylinderförmigen, perforierten Sitzhülse (7) und dem Kolbenteil (19) eine ringförmige Wirbelkammer (28) ausgebildet ist.

4. Regelventil nach einem der Ansprüche 1 bis 3,
dadurch gekennzeichnet,
daß die Ventiltellerhülse (10) und der Kolbenteil (19) unabhängig voneinander verschiebbar und jeweils mit einem eigenen Antrieb verbunden sind.

5. Regelventil nach einem den Ansprüchen 1 bis 3,
dadurch gekennzeichnet,
daß die Ventiltellerhülse (10) und der Kolbenteil (19) gemeinsam verschiebbar sind, wozu diese fest miteinander und mit einem gemeinsamen Antrieb verbunden sind.

6. Regelventil nach einem der vorhergehenden Ansprüche,
dadurch gekennzeichnet,
daß zwischen der Innenwand der Ventiltellerhülse (10) und der Außenweand der Sitzhülse (7) ein merklicher Ringspalt (29) vorgesehen ist.

7. Regelventil nach einem der vorhergehenden Ansprüche,
dadurch gekennzeichnet,
daß der Kolbenteil (19) einen gegen die Innenwand der Sitzhülse (7) vorgespannten Kolbenring (22) trägt.

8. Regelventil nach einem der vorhergehenden Ansprüche,
dadurch gekennzeichnet,
daß bei vollständig geschlossenem Regelventil der Kolbenteil (19) relativ zu der Sitzhülse (7) eine Stellung an einem unteren Rand (25) derselben einnimmt, in dessen Bereich die Sitzhülse (7) frei von Perforierungen (24) ist.

9. Regelventil nach einem der vorhergehenden Ansprüche,
dadurch gekennzeichnet,
daß der Kolbenteil (19) an seinem unteren Teil unterhalb des Kolbenrings (22) mit einem nach unten offenen, hülsenförmigem Ventilkegel (26) versehen ist, dessen zylindrische Wand mit radialen Durchbrechungen versehen ist.

10. Regelventil nach Anspruch 1,
dadurch gekennzeichnet,
daß der dem Öffnungsquerschnitt zwischen Weichdichtung (9) und Ventilsitz (4) vorgeschaltete Regelquerschnitt als Drosselstelle (35) ausgebildet ist und dem Öffnungsquerschnitt eine weitere Drosselstelle (24) nachgeschaltet ist.

11. Regelventil nach Anspruch 10,
dadurch gekennzeichnet,
daß zur Ausbildung der ersten Drosselstelle (35) ein Ventilkegel (30) mit Parabolkegelform vorgesehen ist, der in eine zylindrische Bohrung (31) im Ventilgehäuse eingreift.

12. Regelventil nach den Ansprüchen 10 und 11,
dadurch gekennzeichnet,
daß auf dem Ventilkegel (30) ein Ringkörper (32) angeordnet ist, der die Weichdichtung (9) und wenigstens einen Kolbenring (22) trägt, der am Innenumfang eines Ventilkegelführungsrohres (34) anliegt.

13. Regelventil nach Anspruch 12,
dadurch gekennzeichnet,
daß der Ringkörper (32) über die Perforierung (20) im Ventilkegelführungsrohr (34) hinaus verlängert und gegenüber dem Innenumfang des Ventilkegelrohres abgedichtet ist, und daß der über diesem Ringkörper (32) gebildete, abgedichtete Raum mit dem Ventileinlaß (2) verbunden ist.

## Claims

1. Control valve for controlling and shutting off fluid flow, comprising
a soft packing (9) on a valve disk (10,32) which is connected to a drive and presses said soft packing to a valve seat (4) and lifts it therefrom, wherein in flow direction to the opening cross section between said soft packing (9) and valve seat (4) a control cross section is connected which is smaller than the opening cross section referred thereto on the soft packing (9),
**characterized in that**
the soft packing (9) in the front of the valve disk (10,32), which front is vertical to the longitudinal axis of the valve disk (10,32), is positioned sunk such that the fluid flows essentially in parallel to the exposed side of said soft packing (9) along said soft packing, when the soft packing (9) is lifted from the valve seat (4).

2. Control valve according to claim 1,
characterized in that
the valve plate has the form of a valve disk sleeve (10) completely open on one side, which on its completely open side supports with its face said soft packing (9), wherein the valve disk sleeve (10) can be lifted for reaching the opening position with its soft packing (9) from the valve seat (4), and that as a control member a cylindrical seat sleeve (7) is provided protruding into the cylindrical valve disk sleeve inside room (7), the cylindrical sidewall of which is perforated, and a cylindrical piston portion (19) slidingly sealed against the cylindrical, perforated inside wall of the seat sleeve (7), which is movable relative to the seat sleeve (7) and controlling the fluid flow in the axial direction thereof.

3. Control valve according to claim 2,
characterized in that
between the inside wall of the cylindrical, perforated seat sleeve (7) and the piston portion (19) an annular centrifugal chamber (28) is embodied.

4. Control valve according to one of the claims 1 to 3,
characterized in that
the valve disk sleeve (10) and the piston portion (19) are movable independent from each other and each provided with a drive of its own.

5. Control valve according to one of the claims 1 to 3,
characterized in that
the valve disk sleeve (10) and the piston portion (19) are commonly movable, to which purpose these are fixed to each other and to a common drive.

6. Control valve according to one of the preceding claims,
characterized in that
between the inside wall of the valve seat sleeve (10) and the outer wall of the seat sleeve (7) a distinct annular groove (29) is provided.

7. Control valve according to one of the preceding claims,
characterized in that
the piston portion (19) supports a piston ring (22) biassed against the inner wall of the seat sleeve (7).

8. Control valve according to one of the preceding claims,
characterized in that
with completely closed control valve the piston portion (19) takes relative to the seat sleeve (7) a position on a lower edge (25) thereof, in the area of which the seat sleeve (7) is free from perforations (24).

9. Control valve according to one of the preceding claims,
characterized in that
the piston portion (19) is provided on its lower part below the piston ring (22) with a valve cone (26) which is open to the bottom and is sleeve-shaped, the cylindrical wall of which is provided with radial perforations.

10. Control valve according to claim 1,
characterized in that
the control cross section connected to the opening cross section between soft packing (9) and valve seat (4) is formed as throttle location (35), and after the opening cross section a further throttle location (24) is connected.

11. Control valve according to claim 10,
characterized in that
for forming the first throttle location (35) a valve cone (30) having a parabolic cone form is provided engaging into a cylindrical bore (31) in the valve housing.

12. Control valve according to the claims 10 and 11,
characterized in that
on the valve cone (30) an annular body (32) is arranged which supports the soft packing (9) and at least one piston ring (22) which abuts on the inner circumference of a valve cone pipe (34).

13. Control valve according to claim 12,
characterized in that
the annular body (32) is prolonged beyond the perforation (20) in the valve cone pipe (34) and is sealed against the inner circumference of the valve cone tube, and that the sealed room formed over this annular body (32) is connected to the valve inlet (2).

## Revendications

1. Soupape de réglage pour réglage et arrêt du débit d'un fluide, comprenant
un joint mol (9) à une tête de soupape (10,32) qui est connectée à une commande et presse ledit joint mol contre un siège de soupape (4) et l'enlève du ledit siège de soupape, dans lequel en direction du fluide à la section transversale de la ouverture entre joint mol (9) et siège de soupape (4) une section transversale de réglage est montée qui est plus petite que la section réferée transversale de la ouverture au joint mol (9),
caractérisée en ce que
le joint mol (9) est disposé immergé dans la face verticale à l'axe longitudinale de la tête de soupape (10,32) de façon que la fluide afflue essentiellement parallèlement à la côté dégagée du joint mol (9) le long de ladite face, si le joint mol (9) est enlevé du siège de soupape (4).

2. Soupape de réglage selon la revendication 1,
caractérisée en ce que
la tête de soupape a la forme d'une douille de la tête de soupape (10), quel douille est cylindrique et tout à fait ouverte à une côté, et supporte à sa côté tout à fait ouverte avec sa face le joint mol (9), dans laquelle la douille (10) de la tête de soupape est enlevable pour achever la position ouverte avec son joint mol (9) de la siège de soupape (4), et que comme élément de réglage une douille de siège (7) avant une form cylindrique et avancée dans l'intérieur cylindrique de la douille (10) de la tête de soupape,
la paroi latérale cylindrique duquelle est perforée, et une pièce cylindrique de piston (19) bouchée coulissantement contre la paroi intérieure cylindrique perforée de la douille de siège (7) est prévue qui est coulissante relative à la douille de siège (7) en la direction axiale duquelle, réglant le débit.

3. Soupape de réglage selon la revendication 2,
caracterisée en ce que
entre la paroi intérieure de la douille de siège (7) cylindrique et perforée et la pièce de piston (19) une chambre de turbulence (28) annulaire est formée.

4. Soupape de réglage selon une des revendications 1 à 3,
caracterisée en ce que
la douille (10) de la tête de soupape et la pièce de piston (19) sont coulissantes indépendentes l'un de l'autre et sont chaquune connectées à une commande à soi.

5. Soupape de réglage selon une des revendications 1 à 3,
caracterisée en ce que
la douille (10) de la tête de soupape et la pièce de piston (19) sont coulissantes en commun, à quoi lesdites sont fixées l'une à l'autre et à une commande commune.

6. Soupape de réglage selon une des revendications précédentes,
caracterisée en ce que
entre la paroi intérieure de la douille (10) de la tête de soupape et la paroi extérieure de la douille de la siège (7) une fissure annulaire (29) considérable est prévue.

7. Soupape de réglage selon une des revendications précédentes,
caracterisée en ce que
la pièce de piston (19) supporte un segment de piston (22) tenu contre la paroi interieure de la douille de la siège (7).

8. Soupape de réglage selon une des revendications précédentes,
caracterisée en ce que,
quand la soupape de réglage est tout à fait close, la pièce de piston (19) prend, relative à la douille de siège (7), une position à un bord (25) inférieur de laquelle, dans la région duquel la douille de la siège (7) n'a pas des perforations (24).

9. Soupape de réglage selon une des revendications précédentes,
caracterisée en ce que
la pièce de piston (19) est prévu a sa part inférieure au-dessous du segment de piston (22) avec un cône de soupape (26) ouvert vers le bas et avant la forme d'une douille, la paroi cylindrique duquelle est prévu avec des perforations radiales.

10. Soupape de réglage selon la revendication 1,
caracterisée en ce que
la section transversale de réglage montée à la section transversale de la ouverture entre joint mol (9) et siège de la soupape (4) est formée comme un endroit de l'étranglement (35), et après la section transversale de la ouverture un autre endroit de l'étranglement (24) est connecté.

11. Soupape de réglage selon la revendication 10,
caracterisée en ce que
pour la formation du premièr endroit de l'étranglement (35) un cône de soupape (30) avant parabolic cône forme est prévu, qui s'engrène dans un forage (31) cylindrique dans la boîte à soupape.

12. Soupape de réglage selon les revendications 10 et 11,
caractérisée en ce que
au cône de soupape (30) un corps annulaire (32) est disposé supportant le joint mol (9) et au moins un segment de piston (22) qui est collant à la circonférence intérieure d'un tube de cône de soupape (34).

13. Soupape de réglage selon la revendication 12,
caractérisée en ce que
le corps annulaire (32) est élongé au-dessus de la perforation (20) dans la tube de la cône de soupape (34) et est bouché contre la circonférence intérieure du tube de cône de soupape, et que l'espace bouché et formé au-dessus de ce corps annulaire (32) est connecté à l'entrée de la soupape (2).
